# EUROPÄISCHE PATENTSCHRIFT

(11) **EP 3 292 423 B1**
(45) Veröffentlichungstag und Bekanntmachung des Hinweises auf die Patenterteilung: **15.07.2020**
(21) Anmeldenummer: 16722832.9
(22) Anmeldetag: 03.05.2016
(51) Int. Cl.: G01S 13/931, G01S 15/931, G01S 17/931, G01S 7/40, G01S 7/497, G01S 7/52, G06T 7/73

(54) **DIAGNOSEVERFAHREN FÜR EINEN SICHTSENSOR EINES FAHRZEUGS UND FAHRZEUG MIT EINEM SICHTSENSOR**
DIAGNOSTIC METHOD FOR A VISION SENSOR OF A VEHICLE AND VEHICLE HAVING A VISION SENSOR
PROCÉDÉ DE DIAGNOSTIC POUR UN CAPTEUR DE VISION D'UN VÉHICULE ET VÉHICULE MUNI D'UN CAPTEUR DE VISION

(30) Priorität: 05.05.2015 DE 102015208228
(43) Veröffentlichungstag der Anmeldung: 14.03.2018
(73) Patentinhaber: Bayerische Motoren Werke Aktiengesellschaft, 80809 München (DE)
(72) Erfinder: ZEISLER, Jöran, 81274 München (DE)
(86) Internationale Anmeldenummer: PCT/EP2016/059883
(87) Internationale Veröffentlichungsnummer: WO 2016/177727

(56) Entgegenhaltungen:
- WO-A1-2017/129185
- WO-A2-2006/069978
- DE-A1-102007 037 178
- DE-A1-102007 043 460
- DE-A1-102007 046 648
- DE-A1-102010 049 091
- US-A1- 2010 076 710

## Beschreibung

Die vorliegende Erfindung betrifft ein Diagnoseverfahren für einen Sichtsensor eines Fahrzeugs sowie ein Fahrzeug mit einem Sichtsensor.

Moderne Fahrzeuge, insbesondere Kraftfahrzeuge, weisen eine Vielzahl von Fahrerassistenzsystemen auf, die den Fahrer bei seiner Fahrtätigkeit unterstützen oder entlasten können. Es sind Fahrzeuge bekannt, die einige Fahraufgaben ganz oder teilweise ohne Eingriff des Fahrzeugführers bewerkstelligen können. Der Betrieb solcher Fahrzeuge ist unter dem Begriff teil- bzw. vollautomatisches oder teil- bzw. vollautonomes Fahren bekannt geworden. Die Fahrerassistenzsysteme benötigen ein möglichst umfassendes Bild der das Fahrzeug umgebenden Verkehrssituation. Hierzu verfügen moderne Fahrzeuge über eine Vielzahl von Sichtsensoren, die das Umfeld des Fahrzeugs erfassen können. Auf diese Weise können Objekte im Umfeld des Fahrzeugs erfasst und detektiert werden. Solche Objekte können andere Fahrzeuge, Fußgänger, Radfahrer, Verkehrszeichen, Bauwerke und dergleichen sein. Es können bewegliche und unbewegliche Objekte erfasst werden.

Um einen zuverlässigen Betrieb der Fahrerassistenzsysteme zu gewährleisten muss die Funktionsfähigkeit der Sichtsensoren gewährleistet sein. Diese kann jedoch beeinträchtigt sein. Einerseits können die Sichtsensoren als solche defekt oder eingeschränkt funktionsfähig sein. Andererseits kann ein Sichtsensor in seiner Funktionsfähigkeit durch externe Einflüsse eingeschränkt sein. Beispiele solcher externen Einflüsse sind z.B. Nebel, Regen und eine verschmutzte Sensoraußenfläche. Damit ein Fahrerassistenzsystem, das von einem Sichtsensor gelieferte Daten verwendet, seinerseits ordnungsgemäß funktioniert, sollte gewährleistet sein, dass die von dem Sichtsensor gelieferten Daten nicht durch eine Funktionsunfähigkeit der vorstehend genannten Art verfälscht sind. Es ist daher vorgeschlagen worden, Verfahren zur Erkennung einer eingeschränkten Funktionsfähigkeit von Sichtsensoren durchzuführen. Wird bei einem solchen Verfahren erkannt, dass die Funktionsfähigkeit des Sichtsensors eingeschränkt ist, so kann das Fahrerassistenzsystem die von diesem Sichtsensor gelieferten Daten verwerfen oder ihnen bei der Datenverarbeitung eine verringerte Bedeutung beimessen oder weitere geeignete Maßnahmen ergreifen.

DE 10 2007 043 460 A1 beschreibt eine Anordnung zur Navigation mit einem Radarreflektor und einem Radarsensor. Die Anordnung kann für den Betrieb von fahrerlosen Fahrzeugen genutzt werden. Dabei kann auch eine Funktionsüberprüfung des Radarreflektors und des Radarsensors vorgenommen werden, indem erkannt wird, ob ein vorausliegender Reflektor in der erwarteten Entfernung und/oder Richtung festgestellt wird.

DE 10 2007 037 178 A1 befasst sich mit der Bewertung eines Umfeldsensors eines Fahrzeugs. Mittels ortsfester Basisstationen oder Transponder kann der Erfassungsbereich eines Sensors bestimmt werden.

WO 2006/069978 A2 schlägt vor, zur Kalibrierung einer Stereokamera ortsfeste Objekte wie Ampelanlagen, Verkehrsschilder oder Gebäude zu nutzen.

Ein Verfahren zum Betreiben eines Sensors eines Fahrzeugs ist aus DE 10 2010 049 091 A1 bekannt. Dabei werden zunächst Positionsdaten eines Objekts empfangen und eine Position des Objekts bestimmt. Falls diese Position in einem vorbestimmten Erfassungsbereich eines Sensors des Fahrzeugs liegt, so wird ermittelt, ob das Objekt von dem Sensor erfasst wird. Ist dies nicht der Fall, so kann eine Warnmeldung ausgegeben und / oder ein Fahrerassistenzsystem angepasst werden.

Nachteilig an dem letztgenannten aus dem Stand der Technik bekannten Verfahren ist, dass es nur mit Objekten durchgeführt werden kann, die zur Übertragung ihrer Positionsdaten eingerichtet sind. Das Objekt muss also zur Datenübertragung eingerichtet sein, was für eine Vielzahl von Objekten nicht zutrifft. Weiterhin kann das Verfahren dann, wenn es sich bei dem Objekt um ein bewegliches Objekt handelt, aufgrund der Bewegung des Objekts ungenau sein. Ein weiterer Nachteil besteht darin, dass das Fahrzeug zur Durchführung des Verfahrens eine Empfangseinrichtung zum Empfangen der von dem Objekt gesendeten Positionsdaten benötigt.

Ausgehend vom Stand der Technik stellt sich die Aufgabe, ein Diagnoseverfahren für einen Sichtsensor eines Fahrzeugs anzugeben, das möglichst vielseitig einsetzbar, einfach durchzuführen und zuverlässig ist. Die Aufgabe besteht zudem darin, ein Fahrzeug mit einem Sichtsensor anzugeben, welches zur Durchführung eines solchen Diagnoseverfahrens geeignet ist.

Die Aufgabe wird gelöst bei einem Diagnoseverfahren und einem Fahrzeug mit den Merkmalen der unabhängigen Ansprüche. Vorteilhafte Weiterbildungen der Erfindung sind Gegenstände der abhängigen Ansprüche.

Bei einem ersten Schritt des erfindungsgemäßen Verfahrens erfolgt ein Bestimmen einer ersten Position und einer Bewegungsrichtung des Fahrzeugs. Die erste Position ist diejenige geografische Position, an der sich das Fahrzeug zum Zeitpunkt der Durchführung des Verfahrensschrittes befindet. Die Bestimmung der ersten Position umfasst bevorzugt die Bestimmung der geografischen Koordinaten (geografische Breite und Länge) der ersten Position. Zur Bestimmung der ersten Position und / oder der Bewegungsrichtung des Fahrzeugs können an sich bekannte Vorrichtungen des Fahrzeugs genutzt werden, insbesondere ein Satellitennavigationssystem des Fahrzeugs. Die Bewegungsrichtung des Fahrzeugs kann als Richtungsvektor bestimmt werden. Dieser Richtungsvektor kann mit Bezug zu einem Referenzkoordinatensystem (z.B. Weltkoordinatensystem) bestimmt werden. Die Bewegungsrichtung des Fahrzeugs kann auch mit Bezug zu einem Objekt der Verkehrsinfrastruktur bestimmt werden. Fährt beispielsweise das Fahrzeug auf einer Straße, so kann als Bewegungsrichtung auch die Fahrtrichtung mit Bezug zu der befahrenen Straße angegeben werden. Beispielsweise könnte eine solche Angabe "Route 1 in nördlicher Richtung" oder "Autobahn A9 Richtung München" lauten.

In einem nachfolgenden Verfahrensschritt erfolgt ein Auswählen einer zur Erfassung durch den Sichtsensor geeigneten ortsfesten Landmarke aus einer Landmarken-Datenbank. Eine ortsfeste Landmarke kann auch als unbewegliche oder stationäre Landmarke bezeichnet werden. Es handelt sich bei der ortsfesten Landmarke also um ein Objekt, das sich stets an demselben Ort befindet. Die Landmarken-Datenbank ist eine Datenbank, in der Informationen über Landmarken gespeichert werden. Die in der Landmarken-Datenbank gespeicherten Inhalte können beispielsweise von einem Anbieter erfasst und zur Verfügung gestellt worden sein. Die Landmarken-Datenbank kann zu einer bestimmten Landmarke eine Vielzahl von Informationen enthalten. Zu jeder Landmarke, die sich für die Durchführung des erfindungsgemäßen Verfahrens eignet, müssen zumindest die Art der Landmarke und deren geografische Position in der Landmarken-Datenbank gespeichert sein. Aufgrund der Information über die Art der Landmarke kann bestimmt werden, ob die Landmarke zur Erfassung durch den Sichtsensor geeignet ist. Die geografische Position der Landmarke muss bekannt sein, damit die Landmarke wie vorstehend beschrieben derart ausgewählt werden kann, dass sie in Bewegungsrichtung vor dem Fahrzeug liegt. Überdies wird die Information über die geografische Position im weiteren Verlauf des Verfahrens benötigt.

Bei der Auswahl der Landmarke werden drei Bedingungen berücksichtigt. Erstens muss die Landmarke zur Erfassung durch den Sichtsensor geeignet sein. Ist der Sichtsensor beispielsweise ein Radarsensor, so muss die Landmarke eine durch einen Radarsensor erfassbare Landmarke sein. Hingegen ist bei diesem Beispiel eine Landmarke nicht geeignet, die aufgrund ihrer Beschaffenheit von einem Radarsensor nicht erfassbar ist. Zweitens muss sich die Landmarke in der Bewegungsrichtung des Fahrzeugs vor dem Fahrzeug befinden. Mit anderen Worten wird eine Landmarke ausgewählt, auf die sich das Fahrzeug zubewegt. Es ist nicht nötig, dass sich das Fahrzeug frontal auf die Landmarke zubewegt. Die Landmarke muss sich also nicht in Bewegungsrichtung direkt vor dem Fahrzeug befinden. Es ist lediglich notwendig, dass sich der Abstand des Fahrzeugs zu der Landmarke bei einer Bewegung des Fahrzeugs in Bewegungsrichtung verringert. Die Landmarke kann also beispielsweise eine Landmarke am Straßenrand sein, die das Fahrzeug im Laufe seiner Fahrt (also seiner Bewegung in Bewegungsrichtung) passieren wird. Drittens muss ein Abstand der ersten Position des Fahrzeugs zu der Landmarke größer sein als die Soll-Reichweite des Sichtsensors. Mit anderen Worten wird die Landmarke so ausgewählt, dass sie zu dem Zeitpunkt, zu dem sich das Fahrzeug an der ersten Position befindet, noch nicht von dem Sichtsensor erfasst werden kann, weil sie sich außerhalb seines Erfassungsbereichs befindet. Allerdings wird die Landmarke so ausgewählt, dass sie zu einem späteren Zeitpunkt, zu dem sich das Fahrzeug bereits weiter in seiner Bewegungsrichtung bewegt hat, in den Erfassungsbereich des Sichtsensors gelangen wird. Bei der Auswahl der Landmarke kann bevorzugt ein Verlauf der vorausliegenden Strecke (z.B. ein Straßenverlauf) berücksichtigt werden. Dadurch kann sichergestellt werden, dass die ausgewählte Landmarke tatsächlich im weiteren Fahrverlauf durch den Sichtsensor erfasst werden kann.

In einem nachfolgenden Verfahrensschritt erfolgt ein Erfassen der Landmarke durch den Sichtsensor. Dieser Schritt wird kontinuierlich oder wiederholt so lange ausgeführt, bis der Sichtsensor die Landmarke erfolgreich erfasst hat. Wie vorstehend erläutert, befindet sich die Landmarke zunächst noch außerhalb des Erfassungsbereichs des Sichtsensors. Da der Schritt des Erfassens der Landmarke durch den Sichtsensor kontinuierlich oder wiederholt durchgeführt wird, während sich das Fahrzeug in Richtung der Landmarke bewegt, wird der Sichtsensor die Landmarke erfolgreich erfassen, sobald die Landmarke in den (durch die Ist-Reichweite des Sichtsensors bestimmten) Ist-Erfassungsbereich des Sichtsensors eintritt.

Es kann bevorzugt vorgesehen sein, dass das Verfahren abgebrochen und von vorne begonnen wird, falls das Fahrzeug die Landmarke passiert hat (sich also der Abstand zwischen Fahrzeug und Landmarke wieder vergrößert), die Landmarke aber nicht erfolgreich erfasst werden konnte.

Im Ansprechen auf ein erfolgtes Erfassen der Landmarke durch den Sichtsensor (d.h. sobald die Landmarke durch den Sichtsensor erfolgreich erfasst wurde) erfolgt erfindungsgemäß ein Schritt des Bestimmens einer zweiten Position des Fahrzeugs. Mit anderen Worten wird die Position des Fahrzeugs zu dem Zeitpunkt, an welchem die Landmarke erfolgreich durch den Sichtsensor erfasst wurde, festgestellt. In einem abschließenden Verfahrensschritt wird die Ist-Reichweite des Sichtsensors als Abstand zwischen der zweiten Position des Fahrzeugs zu der Landmarke bestimmt.

Das erfindungsgemäße Verfahren ermöglicht es also, die Ist-Reichweite des Sichtsensors in einfacher Weise zu ermitteln, indem der Umstand ausgenutzt wird, dass die genaue Position der durch den Sichtsensor zu erfassenden und erfassten Landmarke a priori bekannt ist. Sobald der Sichtsensor die Landmarke erfolgreich (also tatsächlich) erfasst, entspricht der Abstand des Sichtsensors zu der Landmarke der Ist-Reichweite des Sichtsensors.

Ausführungsformen der Erfindung sehen vor, dass der Sichtsensor eine Kamera, ein Lasersensor, ein Radarsensor, ein Ultraschallsensor oder ein Bolometer ist. Der Begriff Lasersensor ist weit gefasst zu verstehen und umfasst insbesondere auch einen Lidarsensor. Sichtsensoren der genannten Art werden insbesondere in Kraftfahrzeugen eingesetzt, um Objekte im Umfeld des Kraftfahrzeugs zu detektieren. Moderne Kraftfahrzeuge mit einem teilautomatischen oder vollautomatischen Fahrbetrieb können über zahlreiche Sichtsensoren verschiedener Art verfügen, die das Umfeld des Kraftfahrzeugs fortlaufend erfassen. Mit besonderem Vorteil kann dieselbe Landmarke für die Bestimmung der jeweiligen Ist-Reichweiten mehrerer Sichtsensoren genutzt werden. Hierzu wird für jeden der mehreren Sichtsensoren das Verfahren durchgeführt, wobei bei jedem der Verfahren dieselbe Landmarke ausgewählt wird. Hierzu muss die Landmarke zur Erfassung durch jeden der Sichtsensoren geeignet sein. Sollen beispielsweise mittels derselben Landmarke ein Lidarsensor und ein Radarsensor eines Fahrzeugs getestet werden, so muss die Landmarke sowohl zur Erfassung durch einen Lidarsensor als auch zur Erfassung durch einen Radarsensor geeignet sein.

Mit besonderem Vorteil ist vorgesehen, dass die Landmarke eine codierte Landmarke ist. Eine codierte Landmarke ist eine Landmarke, die nicht nur durch einen Sichtsensor erfassbar ist, sondern die zumindest ein Codierungsmerkmal aufweist, welches vorrangig oder ausschließlich der besseren Erfassbarkeit der Landmarke durch einen Sichtsensor dient. Beispielsweise sind zahlreiche Objekte der Verkehrsinfrastruktur (Verkehrsschilder, Verkehrszeichen, Straßenmarkierungen, Bauwerke, z.B. Brücken) zur Erkennung durch Sichtsensoren, insbesondere Kameras und Lidarsensoren, geeignet. Es handelt sich aber in der Regel nicht um codierte Landmarken. Hingegen weist eine codierte Landmarke ein Codierungsmerkmal auf. Eine codierte Landmarke kann ein Objekt der Verkehrsinfrastruktur (z.B. Verkehrsschilder, Verkehrszeichen, Straßenmarkierungen, Bauwerke, z.B. Brücken) sein, das zusätzlich zu seinem eigentlichen Zweck mit einem Codierungsmerkmal versehen wurde. Eine codierte Landmarke kann alternativ auch ein Objekt sein, das ausschließlich als codierte Landmarke dient. Ein Codierungsmerkmal einer codierten Landmarke kann so beschaffen sein, dass es durch einen Sichtsensor einer bestimmten Art (z.B. Kamera, Radarsensor, Lidarsensor, Ultraschallsensor) besonders gut erfassbar ist. Ein Codierungsmerkmal kann so beschaffen sein, dass es durch Sichtsensoren verschiedener Art besonders gut erfassbar ist. Mit anderen Worten kann ein Codierungsmerkmal so gewählt sein, dass die das Codierungsmerkmal umfassende codierte Landmarke zur Erfassung durch Sichtsensoren verschiedener Art, z.B. sowohl durch eine Kamera als auch durch einen Lidarsensor, geeignet ist. Die Gestaltung eines Codierungsmerkmals kann insbesondere in Bezug auf seine Form, seine Farbe, seine akustischen Eigenschaften und / oder seine elektromagentischen Eigenschaften (einschließlich seiner optischen Eigenschaften) so beschaffen sein, dass es einerseits durch den Sichtsensor besonders gut erfassbar ist und dass es andererseits eine Unterscheidung der codierten Landmarke von anderen Objekten ermöglicht. Mit anderen Worten kann das Codierungsmerkmal so ausgestaltet werden, dass die codierte Landmarke sich möglichst stark von anderen Objekten unterscheidet, so dass eine zufällige Verwechslung der codierten Landmarke mit einem anderen Objekt möglichst unwahrscheinlich ist. Ein Codierungsmerkmal kann eine Information umfassen, welche bei der Erfassung der codierten Landmarke (und somit bei der Erfassung des Codierungsmerkmals) durch den Sichtsensor mit erfasst werden kann. Eine solche Information kann beispielsweise eine eindeutige Kennung der codierten Landmarke sein. Eine solche Information kann beispielsweise eine Angabe der geografischen Position der codierten Landmarke sein.

Zur Erfassung durch aktive Sichtsensoren sind mit Vorteil retroreflektierende Codierungsmerkmale geeignet, welche mit besonderem Vorteil eine Tiefenstruktur aufweisen, um eine Erfassung aus unterschiedlichen Richtungen zu ermöglichen. Aktive Sichtsensoren sind solche Sichtsensoren, die ein Signal emittieren. Zu den aktiven Sichtsensoren zählen beispielsweise Radarsensoren, Lidarsensoren und Ultraschallsensoren. Von aktiven Sichtsensoren zu unterscheiden sind passive Sichtsensoren. Diese sind dazu eingerichtet, ein Signal zu empfangen, ohne zuvor ein eigenes Signal emittiert zu haben. Zu den passiven Sichtsensoren zählen beispielsweise Kameras. Zur Erfassung durch passive Sichtsensoren sind mit Vorteil Codierungsmerkmale geeignet, welche aufgrund ihrer Gestaltung nicht mit zufällig in der Umgebung vorkommenden Objekten verwechselbar sind und insbesondere eine Information umfassen, z.B. eine eindeutige Kennung.

Die Größe des Codierungsmerkmals kann mit Vorteil in Abhängigkeit der Soll-Reichweite und / oder einer Auflösung eines zur Erfassung der codierten Landmarke geeigneten Sichtsensors gewählt sein.

Es kann vorgesehen sein, dass bei der Auswahl der Landmarke codierte Landmarken bevorzugt ausgewählt werden. Besteht also bei dem Schritt des Auswählens der zur Erfassung durch den Sichtsensor geeigneten ortsfesten Landmarke aus der Landmarken-Datenbank die Möglichkeit der Auswahl unter mehreren Landmarken, so kann der Schritt umfassen, dass bevorzugt eine codierte Landmarke ausgewählt wird.

Mit weiterem Vorteil ist die Landmarke eine passive Landmarke. Eine passive Landmarke ist im Gegensatz zu einer aktiven Landmarke eine Landmarke, die nicht zur aktiven Aussendung eines Signals eingerichtet ist. Das erfindungsgemäße Verfahren ist nicht darauf angewiesen, dass die Landmarke von sich aus ein Signal aussendet, mittels welchem sie als Landmarke erkennbar ist und das ggf. die Position der Landmarke enthält. Indem für das Verfahren passive Landmarken genutzt werden, ist das Verfahren vielseitig einsetzbar. Während nämlich die Installation und der Betrieb aktiver Landmarken verhältnismäßig aufwändig ist, können passive Landmarken in großer Zahl genutzt werden. Insbesondere können alle geeigneten Objekte der Verkehrsinfrastruktur ohne weitere Maßnahmen für das erfindungsgemäße Verfahren eingesetzt werden, wenn sie wie vorstehend beschrieben in der Landmarken-Datenbank verzeichnet sind.

In weiterer Ausgestaltung erfolgt zusätzlich ein Bestimmen eines Unsicherheitsbereichs der ersten Position des Fahrzeugs und / oder eines Unsicherheitsbereichs einer Position der Landmarke. Der Unsicherheitsbereich der ersten Position des Fahrzeugs kann beispielsweise von derjenigen Vorrichtung des Fahrzeugs bestimmt werden, die die erste Position des Fahrzeugs bestimmt, also z.B. von einem SatellitenNavigationssystem des Fahrzeugs. Dieses kann beispielsweise in an sich bekannter Weise in Abhängigkeit von der Anzahl der Satelliten, die bei der Positionsbestimmung genutzt werden konnten, sowie in Abhängigkeit von der Signalqualität der von den Satelliten empfangenen Signale einen Unsicherheitsbereich bestimmen. Der Unsicherheitsbereich kann beispielsweise eine Angabe eines Radius um die erste Position umfassen, innerhalb dessen die tatsächliche Position des Fahrzeugs mit einer vorgegebenen Wahrscheinlichkeit, z.B. 90 % oder 95 %, liegt. Der Unsicherheitsbereich der Position der Landmarke kann beispielsweise in der Landmarken-Datenbank verzeichnet sein. Es ist weiter vorgesehen, dass der Schritt des Auswählens der Landmarke derart erfolgt, dass ein Abstand der ersten Position des Fahrzeugs zu der Landmarke größer ist als die Summe der Soll-Reichweite des Sichtsensors und des Unsicherheitsbereichs der ersten Position des Fahrzeugs und / oder des Unsicherheitsbereichs der Position der Landmarke. Mit anderen Worten wird die Landmarke so ausgewählt, dass sie auch unter Berücksichtigung des Unsicherheitsbereichs oder der Unsicherheitsbereiche außerhalb der Soll-Reichweite des Sichtsensors liegt. Auf diese Weise wird sichergestellt, dass die Landmarke erst im weiteren Verlauf der Fahrzeugbewegung (und somit im weiteren Verlauf des Verfahrens) in den Erfassungsbereich des Sichtsensors gelangt.

Eine besonders vorteilhafte Weiterbildung der Erfindung sieht vor, dass das erfindungsgemäße Diagnoseverfahren mehrfach, d.h. ein erstes Mal und mindestens ein weiteres Mal, durchgeführt wird. Dabei wird bei jeder weiteren Durchführung des Verfahrens eine von der bei der vorherigen Durchführung des Verfahrens ausgewählten und erfassten Landmarke verschiedene Landmarke ausgewählt und erfasst. Abschließend erfolgt ein Bestimmen eines Mittelwerts der Ist-Reichweite aus den mindestens zwei bestimmten Ist-Reichweiten. Mit anderen Worten ist also vorgesehen, das Verfahren mehrfach durchzuführen und aus den jeweiligen Ergebnissen einen Mittelwert zu bilden. Hierdurch kann die Zuverlässigkeit der ermittelten Ist-Reichweite erhöht werden, indem der Einfluss möglicher Fehlerquellen durch die Mittelwertbildung gemindert wird. Mögliche Fehlerquellen können Fehler und / oder Ungenauigkeiten in der Landmarken-Datenbank und / oder beim Bestimmen der ersten und / oder zweiten Position des Fahrzeugs umfassen.

Ein erfindungsgemäßes Fahrzeug verfügt über einen Sichtsensor mit einer Soll-Reichweite, eine Navigationsvorrichtung zur Bestimmung einer Position und einer Bewegungsrichtung des Fahrzeugs, einer Datenvorrichtung für den Zugriff auf eine Landmarken-Datenbank zur Speicherung zumindest einer Position zumindest einer ortsfesten Landmarke und eine Diagnosevorrichtung zur Durchführung des erfindungsgemäßen Verfahrens.

Eine Ausführungsform sieht vor, dass die Landmarken-Datenbank Bestandteil des Fahrzeugs ist. Beispielsweise kann die Landmarken-Datenbank in einem Datenspeicher der Navigationsvorrichtung oder der Diagnosevorrichtung gespeichert sein.

Eine alternative Ausführungsform sieht vor, dass die Landmarken-Datenbank außerhalb des Fahrzeugs angeordnet ist, beispielsweise auf einem Internet-Server. Bei dieser Ausführungsform umfasst das Fahrzeug ein Kommunikationsmodul zur Datenkommunikation mit der Landmarken-Datenbank. Eine solche Datenkommunikation kann beispielsweise über Mobilfunk (LTE, UMTS und dergleichen) und / oder WLAN erfolgen.

Die Erfindung eignet sich für Fahrzeuge aller Art, insbesondere für Kraftfahrzeuge, insbesondere Personenkraftwagen und Lastkraftwagen, sowie für Krafträder und für Wasserfahrzeuge. Insbesondere ist die Erfindung für Fahrzeuge geeignet, die über einen teilautomatischen oder vollautomatischen Fahrmodus verfügen.

Weitere Ausführungsformen der Erfindung werden nachfolgend anhand beispielhafter Darstellungen erläutert. Es zeigen
- Fig. 1: eine Darstellung eines Kraftfahrzeugs mit mehreren Sichtsensoren sowie eine ortsfeste Landmarke,
- Fig. 2: eine Darstellung eines Kraftfahrzeugs mit einem voll funktionsfähigen Sichtsensor sowie eine ortsfeste Landmarke zu zwei unterschiedlichen Zeitpunkten und
- Fig. 3: eine Darstellung eines Kraftfahrzeugs mit einem eingeschränkt funktionsfähigen Sichtsensor sowie eine ortsfeste Landmarke zu zwei unterschiedlichen Zeitpunkten.

Gleiche Bezugszeichen kennzeichnen in den Figuren gleiche Merkmale der dargestellten Ausführungsformen der Erfindung. Es wird darauf hingewiesen, dass es sich bei den dargestellten Figuren sowie der zugehörigen Beschreibung lediglich um Ausführungsbeispiele der Erfindung handelt. Insbesondere sind Darstellungen von Merkmalskombinationen in den Figuren und / oder der Figurenbeschreibung nicht dahingehend auszulegen, dass die Erfindung zwingend die Verwirklichung aller genannten Merkmale erfordert. Andere Ausführungsformen der Erfindung können weniger, mehr und / oder andere Merkmale enthalten. Der Schutzbereich und die Offenbarung der Erfindung ergeben sich aus den beiliegenden Patentansprüchen und der vollständigen Beschreibung. Es wird zudem darauf hingewiesen, dass es sich bei den Darstellungen um Prinzipdarstellungen von Ausführungsformen der Erfindung handelt. Die Anordnung der einzelnen dargestellten Elemente zueinander ist nur beispielhaft gewählt und kann bei anderen Ausführungsformen der Erfindung anders gewählt werden. Weiterhin ist die Darstellung nicht unbedingt maßstabsgetreu. Einzelne dargestellte Merkmale können zu Zwecken der besseren Veranschaulichung vergrößert oder verkleinert dargestellt sein.

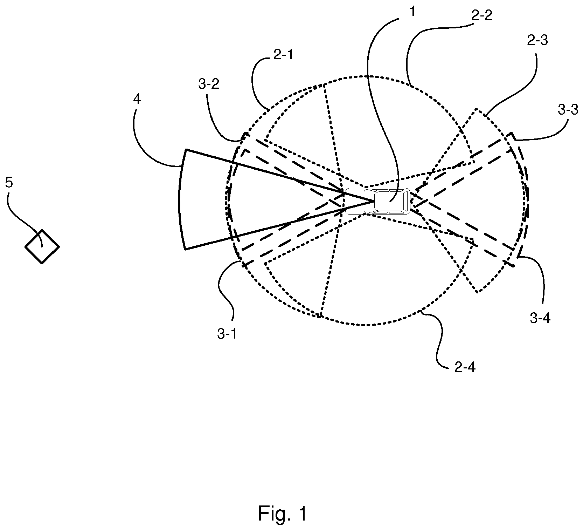

Fig. 1 zeigt eine Darstellung eines Kraftfahrzeugs 1 in einer beispielhaften Verkehrssituation. Das Kraftfahrzeug 1 bewegt sich auf einer (nicht dargestellten) Straße in Richtung einer Landmarke 5. Das Fahrzeug verfügt über mehrere Sichtsensoren. An der Vorderseite, der Rückseite, der linken und der rechten Seite des Fahrzeugs 1 ist jeweils ein Lasersensor angeordnet. Die Erfassungsbereiche der Lasersensoren sind durch gepunktete Linien dargestellt. Die Erfassungsbereiche sind kreissegmentförmig. Dies ist lediglich beispielhaft zu verstehen, da der Erfassungsbereich eines Sichtsensors auch andere Formen aufweisen kann. Der jeweilige Radius entspricht der Soll-Reichweite 2-1, 2-2, 2-3, 2-4 des jeweiligen Sensors. Das Fahrzeug 1 verfügt weiterhin über insgesamt vier Radarsensoren. Jeweils zwei Radarsensoren sind links und rechts an der Vorderseite und an der Rückseite des Fahrzeugs 1 angeordnet. Die Erfassungsbereiche der Radarsensoren sind mit gestrichelten Linien dargestellt. Die Erfassungsbereiche sind (wiederum lediglich beispielhaft) als Kreissegmente dargestellt. Die Radien entsprechen den jeweiligen Soll-Reichweiten 3-1, 3-2, 3-3, 3-4. Das Fahrzeug 1 verfügt darüber hinaus über eine Kamera, welche an der Frontscheibe des Fahrzeugs 1 angeordnet ist. Der Erfassungsbereich der Kamera ist mit einer durchgezogenen Linie dargestellt. Die Kamera hat eine Soll-Reichweite 4. Weiter ist in Fig. 1 eine ortsfeste Landmarke 5 zu sehen, welche sich am Rand der (nicht dargestellten) Straße befindet, auf der das Fahrzeug 1 fährt. Die Landmarke 5 ist zur Erfassung durch die Kamera des Fahrzeugs 1 geeignet. Die Landmarke 5 ist symbolisch mit einem Rautensymbol dargestellt. Die Landmarke 5 könnte eine codierte Landmarke sein und tatsächlich ein rautenförmiges Codierungsmerkmal aufweisen, das eine besonders zuverlässige Erfassung der Landmarke 5 durch die Kamera ermöglicht.

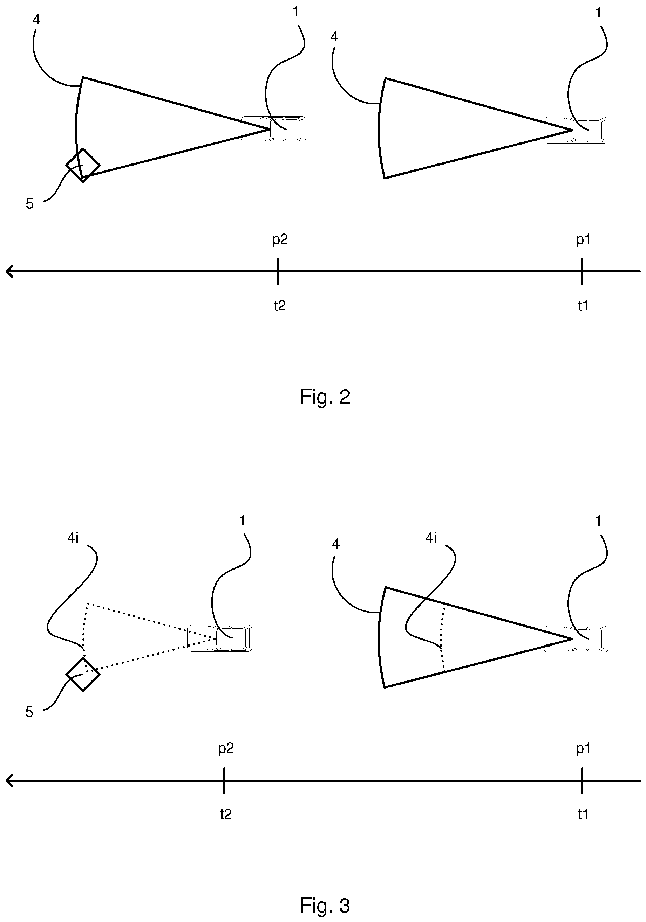

Fig. 2 zeigt eine Darstellung eines Kraftfahrzeugs 1 mit einem voll funktionsfähigen Sichtsensor sowie eine ortsfeste Landmarke 5 zu zwei unterschiedlichen Zeitpunkten t1, t2. Bei dem Sichtsensor handelt es sich um eine Kamera. Die Kamera ist voll funktionsfähig. Ihre Ist-Reichweite entspricht daher ihrer Soll-Reichweite 4. Die Landmarke 5 ist zur Erfassung durch die Kamera geeignet. Die Bewegungsrichtung des Fahrzeugs auf der (nicht dargestellten) Straße ist durch einen Pfeil gekennzeichnet. Auf dem Pfeil sind Zeitpunkte t1, t2 und Positionen p1, p2 des Fahrzeugs aufgetragen.

Anhand der Darstellung der Fig. 2 soll nun der Ablauf des erfindungsgemäßen Diagnoseverfahrens für die Kamera des Fahrzeugs 1 beispielhaft erläutert werden. Das Verfahren wird zum Zeitpunkt t1 gestartet. Es wird zu diesem Zeitpunkt t1 die erste Position p1 des Fahrzeugs 1 bestimmt. In der Landmarken-Datenbank wird nun eine passende Landmarke gesucht und ausgewählt. Im vorliegenden Beispiel wird die Landmarke 5 ausgewählt, da sie alle erforderlichen Bedingungen erfüllt:
- Die Landmarke 5 ist zur Erfassung durch die Kamera geeignet;
- Der Abstand der Landmarke 5 von der ersten Position p1 ist größer als die Soll-Reichweite 4 der Kamera;
- Die Landmarke 5 liegt in Bewegungsrichtung des Fahrzeugs 1 vor dem Fahrzeug 1.

Nachdem die Landmarke 5 ausgewählt wurde, erfolgt ein Erfassen der Landmarke 5 durch die Kamera. Dieser Schritt wird wiederholt ausgeführt, während sich das Fahrzeug 1 in Bewegungsrichtung bewegt, was in Fig. 2 durch den nach links gerichteten Pfeil angedeutet ist. Während sich das Fahrzeug also von der ersten Position p1 aus weiter bewegt, versucht die Kamera fortlaufend, die Landmarke 5 zu erfassen. Dies kann zunächst (d.h. an und nahe bei der Position p1) nicht erfolgreich sein, da der Abstand der Landmarke 5 zu der ersten Position p1 größer ist als die Soll-Reichweite 4 der Kamera. Das Fahrzeug 1 nähert sich jedoch der Landmarke 5, so dass die Landmarke 5 schließlich in den Erfassungsbereich der Kamera gelangt. Dies ist zum Zeitpunkt t2 der Fall, zu welchem sich das Fahrzeug 1 an der zweiten Position p2 befindet. Die Landmarke 5 wird zu diesem Zeitpunkt t2 erfolgreich durch die Kamera erfasst. Im Ansprechen auf das erfolgte Erfassen der Landmarke 5 durch die Kamera wird die zweite Position p2 des Fahrzeugs 1 bestimmt. Schließlich wird die Ist-Reichweite der Kamera als Abstand zwischen der zweiten Position p2 des Fahrzeugs 1 zu der Landmarke 5 bestimmt. In dem in Fig. 2 dargestellten Beispiel ergibt das Verfahren, dass die Ist-Reichweite gleich der Soll-Reichweite 4 ist. Es kann somit festgestellt werden, dass die Kamera voll funktionsfähig ist.

Fig. 3 zeigt eine Darstellung eines Kraftfahrzeugs 1 mit einem eingeschränkt funktionsfähigen Sichtsensor sowie eine ortsfeste Landmarke 5 zu zwei unterschiedlichen Zeitpunkten t1, t2. Die dargestellte Situation entspricht weitgehend derjenigen der Fig. 2, wobei der einzige Unterschied darin besteht, dass in dem in Fig. 3 gezeigten Beispiel die Kamera nicht voll funktionsfähig, sondern nur eingeschränkt funktionsfähig ist. Dies äußert sich darin, dass der tatsächliche Erfassungsbereich der Kamera von dem Soll-Erfassungsbereich der Kamera abweicht. Der durch die Soll-Reichweite 4 der Kamera festgelegte Soll-Erfassungsbereich ist wie in Fig. 2 mit einer durchgezogenen Linie dargestellt. Der durch die gegenüber der Soll-Reichweite 4 verringerte Ist-Reichweite 4i der Kamera festgelegte Ist-Erfassungsbereich ist mit einer gepunkteten Linie dargestellt.

Es soll nun anhand von Fig. 3 der Ablauf des erfindungsgemäßen Diagnoseverfahrens für die Kamera des Fahrzeugs 1 beispielhaft erläutert werden. Zunächst startet das Verfahren wie mit Bezug zu Fig. 2 beschrieben zum Zeitpunkt t1. Es wird zu diesem Zeitpunkt t1 die erste Position p1 des Fahrzeugs 1 bestimmt und in der Landmarken-Datenbank wird die passende Landmarke 5 gesucht und ausgewählt. Nachdem die Landmarke 5 ausgewählt wurde, erfolgt ein Erfassen der Landmarke 5 durch die Kamera. Dieser Schritt wird wiederholt ausgeführt, während sich das Fahrzeug 1 in Bewegungsrichtung bewegt, was in Fig. 3 durch den nach links gerichteten Pfeil angedeutet ist. Während sich das Fahrzeug also von der ersten Position p1 aus weiter bewegt, versucht die Kamera fortlaufend, die Landmarke 5 zu erfassen. Dies kann zunächst (d.h. an und nahe bei der Position p1) nicht erfolgreich sein, da der Abstand der Landmarke 5 zu der ersten Position p1 größer ist als die Soll-Reichweite 4 der Kamera. Das Fahrzeug 1 nähert sich nun wiederum der Landmarke 5. Im Unterschied zu der in Fig. 2 dargestellten Situation kann jedoch die Kamera die Landmarke 5 noch nicht erfolgreich erfassen, sobald die Landmarke 5 in den durch die Soll-Reichweite 4 gebildeten Soll-Erfassungsbereich gelangt, da die Kamera nur eingeschränkt funktionsfähig ist und eine verringerte Ist-Reichweite 4i aufweist. Mit zunehmender Annäherung des Fahrzeugs 1 an die Landmarke 5 gelangt die Landmarke 5 jedoch schließlich in den Ist-Erfassungsbereich der Kamera. Dies ist zum Zeitpunkt t2 der Fall, zu welchem sich das Fahrzeug 1 an der zweiten Position p2 befindet. Die Landmarke 5 wird zu diesem Zeitpunkt t2 erfolgreich durch die Kamera erfasst. Im Ansprechen auf das erfolgte Erfassen der Landmarke 5 durch die Kamera wird die zweite Position p2 des Fahrzeugs 1 bestimmt. Es sei zur Verdeutlichung darauf hingewiesen, dass der Zeitpunkt t2 in Fig. 3 ein späterer Zeitpunkt ist als der Zeitpunkt t2 in Fig. 2. Ebenso ist die Position p2 in Fig. 3 eine näher an der Landmarke 5 gelegene Position als die Position p2 in Fig. 2. Es wird dann die Ist-Reichweite 4i der Kamera als Abstand zwischen der zweiten Position p2 des Fahrzeugs 1 zu der Landmarke 5 bestimmt. In dem in Fig. 3 dargestellten Beispiel ergibt das Verfahren, dass die Ist-Reichweite 4i wesentlich geringer ist als die Soll-Reichweite 4. Es können aufgrund dieser Erkenntnis unterschiedliche Maßnahmen erfolgen. Beispielsweise kann vorgesehen sein, dass die Kamera nicht mehr als Sichtsensor für einen teil- oder vollautomatischen Fahrmodus verwendet wird. Es kann vorgesehen sein, dass daher der teil- oder vollautomatische Fahrmodus deaktiviert wird, bis die Kamera wieder voll funktionsfähig ist. Es kann vorgesehen sein, dass der Fahrer einen Hinweis erhält, dass er die Kamera in einer Werkstatt überprüfen und warten lassen sollte.

### Bezugszeichenliste

- 1: Fahrzeug
- 2-1 bis 2-4: Soll-Reichweite (Lasersensoren)
- 3-1 bis 3-4: Soll-Reichweite (Radarsensoren)
- 4: Soll-Reichweite (Kamera)
- 4i: Ist-Reichweite (Kamera)
- 5: Landmarke
- p1: Erste Position des Fahrzeugs
- p2: Zweite Position des Fahrzeugs
- t1, t2: Zeitpunkte

## Patentansprüche

1. Diagnoseverfahren für einen Sichtsensor eines Fahrzeugs (1), wobei der Sichtsensor eine Soll-Reichweite aufweist (2-1, 2-2, 2-3, 2-4, 3-1, 3-2, 3-3, 3-4, 4) mit den Schritten:
- Bestimmen einer ersten Position (p1) und einer Bewegungsrichtung des Fahrzeugs (1),
- Auswählen einer zur Erfassung durch den Sichtsensor geeigneten ortsfesten Landmarke (5) aus einer Landmarken-Datenbank, wobei sich die Landmarke (5) in der Bewegungsrichtung des Fahrzeugs (1) vor dem Fahrzeug (1) befindet, wobei ein Abstand der ersten Position (p1) des Fahrzeugs (1) zu der Landmarke (5) größer ist als die Soll-Reichweite (2-1, 2-2, 2-3, 2-4, 3-1, 3-2, 3-3, 3-4, 4) des Sichtsensors,
- Erfassen der Landmarke (5) durch den Sichtsensor und im Ansprechen auf ein erfolgtes Erfassen der Landmarke (5) durch den Sichtsensor
- Bestimmen einer zweiten Position (p2) des Fahrzeugs (1),
- Bestimmen einer Ist-Reichweite (4i) des Sichtsensors als Abstand zwischen der zweiten Position (p2) des Fahrzeugs (1) und der Landmarke (5).

2. Diagnoseverfahren nach Anspruch 1, wobei der Sichtsensor eine Kamera, ein Lasersensor, insbesondere ein Lidarsensor, ein Radarsensor, ein Ultraschallsensor oder ein Bolometer ist.

3. Diagnoseverfahren nach einem der vorhergehenden Ansprüche, wobei die Landmarke eine codierte Landmarke (5) ist.

4. Diagnoseverfahren nach Anspruch 1, wobei die Landmarke eine passive Landmarke (5) ist.

5. Diagnoseverfahren nach einem der vorhergehenden Ansprüche mit dem Schritt
- Bestimmen eines Unsicherheitsbereichs der ersten Position (p1) des Fahrzeugs (1) und / oder eines Unsicherheitsbereichs einer Position der Landmarke (5),
wobei der Schritt des Auswählens der Landmarke (5) derart erfolgt, dass ein Abstand der ersten Position (p1) des Fahrzeugs (1) zu der Landmarke (5) größer ist als die Summe der Soll-Reichweite (2-1, 2-2, 2-3, 2-4, 3-1, 3-2, 3-3, 3-4, 4) des Sichtsensors und des Unsicherheitsbereichs der ersten Position (p1) des Fahrzeugs (1) und / oder des Unsicherheitsbereichs der Position der Landmarke (5).

6. Diagnoseverfahren nach einem der vorhergehenden Ansprüche, wobei das Verfahren ein erstes Mal und mindestens ein weiteres Mal durchgeführt wird, wobei bei jeder weiteren Durchführung des Verfahrens eine von der bei der vorherigen Durchführung des Verfahrens ausgewählten und erfassten Landmarke (5) verschiedene Landmarke ausgewählt und erfasst wird, mit dem abschließenden Schritt
- Bestimmen eines Mittelwerts der Ist-Reichweite (4i) aus den mindestens zwei bestimmten Ist-Reichweiten.

7. Fahrzeug (1) mit einem Sichtsensor mit einer Soll-Reichweite (2-1, 2-2, 2-3, 2-4, 3-1, 3-2, 3-3, 3-4, 4) umfassend eine Navigationsvorrichtung zur Bestimmung einer Position und einer Bewegungsrichtung des Fahrzeugs, einer Datenvorrichtung für den Zugriff auf eine Landmarken-Datenbank zur Speicherung zumindest einer Position zumindest einer ortsfesten Landmarke (5) und eine Diagnosevorrichtung zur Durchführung des Verfahrens nach einem der Ansprüche 1 bis 6.

8. Fahrzeug (1) nach Anspruch 7, weiter umfassend die Landmarken-Datenbank.

9. Fahrzeug (1) nach Anspruch 7, wobei die Landmarken-Datenbank außerhalb des Fahrzeugs (1) angeordnet ist, das Fahrzeug (1) weiter umfassend ein Kommunikationsmodul zur Datenkommunikation mit der Landmarken-Datenbank.

## Claims

1. Diagnostic method for a vision sensor of a vehicle (1), the vision sensor having a desired range (2-1, 2-2, 2-3, 2-4, 3-1, 3-2, 3-3, 3-4, 4), having the steps of:
- determining a first position (p1) and a direction of movement of the vehicle (1),
- selecting a stationary landmark (5) suitable for detection by the vision sensor from a landmark database, the landmark (5) being in front of the vehicle (1) in the direction of movement of the vehicle (1), a distance between the first position (p1) of the vehicle (1) and the landmark (5) being greater than the desired range (2-1, 2-2, 2-3, 2-4, 3-1, 3-2, 3-3, 3-4, 4) of the vision sensor,
- detecting the landmark (5) by means of the vision sensor
and, in response to detection of the landmark (5) taken place by the vision sensor,
- determining a second position (p2) of the vehicle (1),
- determining an actual range (4i) of the vision sensor as the distance between the second position (p2) of the vehicle (1) and the landmark (5).

2. Diagnostic method according to Claim 1, the vision sensor being a camera, a laser sensor, in particular a lidar sensor, a radar sensor, an ultrasonic sensor or a bolometer.

3. Diagnostic method according to one of the preceding claims, the landmark being a coded landmark (5).

4. Diagnostic method according to Claim 1, the landmark being a passive landmark (5).

5. Diagnostic method according to one of the preceding claims, having the step of
- determining an uncertainty range of the first position (p1) of the vehicle (1) and/or an uncertainty range of a position of the landmark (5),
the step of selecting the landmark (5) being carried out in such a manner that a distance between the first position (p1) of the vehicle (1) and the landmark (5) is greater than the sum of the desired range (2-1, 2-2, 2-3, 2-4, 3-1, 3-2, 3-3, 3-4, 4) of the vision sensor and the uncertainty range of the first position (p1) of the vehicle (1) and/or the uncertainty range of the position of the landmark (5).

6. Diagnostic method according to one of the preceding claims, the method being performed a first time and at least one further time, a landmark which differs from the landmark (5) selected and detected during the previous performance of the method being selected and detected during each further performance of the method, with the final step of
- determining a mean value of the actual range (4i) from the at least two determined actual ranges.

7. Vehicle (1) having a vision sensor with a desired range (2-1, 2-2, 2-3, 2-4, 3-1, 3-2, 3-3, 3-4, 4), comprising a navigation apparatus for determining a position and a direction of movement of the vehicle, a data apparatus for accessing a landmark database for storing at least one position of at least one stationary landmark (5), and a diagnostic apparatus for carrying out the method according to one of Claims 1 to 6.

8. Vehicle (1) according to Claim 7, also comprising the landmark database.

9. Vehicle (1) according to Claim 7, the landmark database being arranged outside the vehicle (1), the vehicle (1) also comprising a communication module for data communication with the landmark database.

## Revendications

1. Procédé de diagnostic pour un capteur de vision d'un véhicule (1), dans lequel le capteur de vision présente une portée théorique (2-1, 2-2, 2-3, 2-4, 3-1, 3-2, 3-3, 3-4, 4), comprenant les étapes suivantes :
- la détermination d'une première position (p1) et d'une direction de déplacement du véhicule (1),
- la sélection d'un point de repère fixe (5) approprié pour la détection par le capteur de vision dans une base de données de points de repère, dans lequel le point de repère (5) se trouve dans la direction de déplacement du véhicule (1), devant le véhicule (1), dans lequel une distance entre la première position (p1) du véhicule (1) et le point de repère (5) est supérieure à la portée théorique (2-1, 2-2, 2-3, 2-4, 3-1, 3-2, 3-3, 3-4, 4) du capteur de vision,
- la détection du point de repère (5) par le capteur de vision et, en réponse à une détection réussie du point de repère (5) par le capteur de vision
- la détermination d'une deuxième position (p2) du véhicule (1),
- la détermination d'une portée réelle (4i) du capteur de vision en tant que distance entre la deuxième position (p2) du véhicule (1) et le point de repère (5).

2. Procédé de diagnostic selon la revendication 1, dans lequel le capteur de vision est une caméra, un capteur laser, en particulier un capteur lidar, un capteur radar, un capteur à ultrasons ou un bolomètre.

3. Procédé de diagnostic selon l'une des revendications précédentes, dans lequel le point de repère est un point de repère codé (5).

4. Procédé de diagnostic selon la revendication 1, dans lequel le point de repère est un point de repère passif (5) .

5. Procédé de diagnostic selon l'une des revendications précédentes comprenant l'étape suivante :
- la détermination d'une plage d'incertitude de la première position (p1) du véhicule (1) et/ou d'une plage d'incertitude d'une position du point de repère (5), dans lequel l'étape de sélection du point de repère (5) est effectuée de telle manière qu'une distance entre la première position (p1) du véhicule (1) et le point de repère (5) est supérieure à la somme de la portée théorique (2-1, 2-2, 2-3, 2-4, 3-1, 3-2, 3-3, 3-4, 4) du capteur de vision et de la plage d'incertitude de la première position (p1) du véhicule (1) et/ou de la plage d'incertitude de la position du point de repère (5).

6. Procédé de diagnostic selon l'une des revendications précédentes, dans lequel le procédé est exécuté une première fois et au moins une fois supplémentaire, dans lequel, à chaque nouvelle exécution du procédé, un point de repère différent du point de repère (5) sélectionné et détecté lors de l'exécution précédente du procédé est sélectionné et détecté, comprenant l'étape finale suivante :
- la détermination d'une valeur moyenne de la portée réelle (4i) à partir desdites au moins deux portées réelles déterminées.

7. Véhicule (1) comprenant un capteur de vision présentant une portée théorique (2-1, 2-2, 2-3, 2-4, 3-1, 3-2, 3-3, 3-4, 4) comprenant un dispositif de navigation destiné à déterminer une position et une direction de déplacement du véhicule, un dispositif de données destiné à accéder à une base de données de points de repère pour stocker au moins une position d'au moins un point de repère fixe (5) et un dispositif de diagnostic destiné à mettre en œuvre le procédé selon l'une des revendications 1 à 6.

8. Véhicule (1) selon la revendication 7, comprenant en outre la base de données de points de repère.

9. Véhicule (1) selon la revendication 7, dans lequel la base de données de points de repère se trouve à l'extérieur du véhicule (1), le véhicule (1) comprenant en outre un module de communication pour la communication de données avec la base de données de points de repère.
